# FASCICULE DE BREVET EUROPEEN

(11) **EP 2 435 307 B1**
(45) Date de publication et mention de la délivrance du brevet: **10.07.2013**
(21) Numéro de dépôt: 10723048.4
(22) Date de dépôt: 19.05.2010
(51) Int. Cl.: B64D 29/06, B64D 33/04, B64F 5/00, F02K 1/76, H02P 5/74

(54) **NACELLE DE MOTEUR D'AERONEF COMPORTANT UN CAPOT MOBILE MU PAR DES MOTEURS ELECTRIQUES**
EINE DURCH ELEKTROMOTOREN BEWEGTE MOBILE HAUBE UMFASSENDE FLUGZEUGTRIEBWERKSGONDEL
AIRCRAFT ENGINE NACELLE COMPRISING A MOBILE COWL MOVED BY ELECTRIC MOTORS

(30) Priorité: 28.05.2009 FR 0902578
(43) Date de publication de la demande: 04.04.2012
(73) Titulaire: SAGEM Défense Sécurité, 75015 Paris (FR); AIRCELLE, 76700 Gonfreville l'Orcher (FR)
(72) Inventeur: WEIBEL, Jean-François, F-75015 Paris (FR); PIATON, Jérôme, F-75015 Paris (FR); BAUDU, Pierre, F-76280 Criquetot L'esneval (FR); PEREIRA, David, F-91470 Limours (FR)
(74) Mandataire: Lavialle, Bruno François Stéphane
(86) Numéro de dépôt international: PCT/EP2010/056924
(87) Numéro de publication internationale: WO 2010/136369

(56) Documents cités:
- EP-A1- 0 843 089
- FR-A- 1 326 910
- GB-A- 2 274 490
- US-B1- 6 340 135

## Description

La présente invention concerne une nacelle de moteur d'aéronef agencée pour caréner et atteler le moteur à une partie structurelle de l'aéronef comme la voilure ou le fuselage. L'invention concerne plus particulièrement les nacelles pour turboréacteurs à double flux pourvus de moyens d'inversion de poussée comportant des parois mobiles, pétales, portes ou aubes, de renvoi du flux d'air secondaire vers l'avant.

Une telle nacelle comprend généralement un capot fixe entourant la partie avant du moteur (au niveau de la soufflante) et un capot mobile, en une ou deux pièces, entourant la partie du moteur intégrant les moyens d'inversion de poussée. Le capot mobile est monté sur des glissières pour coulisser entre une position rapprochée du capot fixe et une position écartée du capot fixe. Dans la position rapprochée, le capot mobile ferme des ouvertures d'échappement du flux d'air secondaire et, dans la position écartée, le capot mobile découvre lesdites ouvertures permettant l'échappement du flux d'air renvoyé vers l'avant pour inverser la poussée du réacteur.

Classiquement, les moyens de coulissement du capot mobile sont des vérins hydrauliques associés à des moyens de synchronisation mécanique pour déplacer simultanément les tiges des vérins.

Une des tendances actuellement en développement dans l'aéronautique est de remplacer les actionneurs hydrauliques par des actionneurs électromécaniques comportant des moteurs électriques afin de gagner du poids, de simplifier la maintenance et d'offrir une plus grande souplesse de commande desdits actionneurs. Les vérins hydrauliques sont généralement remplacés par des vérins électriques comportant un moteur électrique entraînant une vis sans fin sur laquelle est monté un écrou relié à l'élément devant être déplacé.

D'ailleurs, le document EP 0 843 089 est considéré comme le document de l'état de la technique le plus proche.

L'application d'actionneurs électromécaniques au déplacement du capot mobile de la nacelle a néanmoins été contrariée par la substitution de matériaux composites au métal traditionnellement utilisé pour la réalisation des capots. En effet, les capots en matériaux composites sont moins rigides que ceux réalisés en métal imposant une synchronisation précise des actionneurs agissant sur le capot mobile pour éviter de tordre et de détériorer celui-ci. Une solution retenue met en oeuvre un unique moteur électrique relié par des arbres flexibles à des actionneurs comportant une vis sans fin sur laquelle est monté un écrou relié au capot mobile. Les arbres flexibles représentent dix pour cent de la masse totale des moyens de déplacement, compliquent l'installation des moyens de déplacement sur la nacelle et imposent des opérations de maintenance périodiques contraignantes.

Il aurait pu être envisagé d'utiliser plusieurs moteurs électriques asservis en position. L'électronique de commande et le logiciel de pilotage nécessaires à la synchronisation des moteurs auraient cependant été complexes. Un module de détection de position aurait dû en outre être associé à chaque moteur.

Un but de l'invention est de fournir un moyen simple pour déplacer le capot mobile.

A cet effet, on prévoit, selon l'invention, une nacelle de réception d'un moteur d'aéronef, comportant un capot fixe tubulaire et au moins une partie mobile reliée au capot fixe par l'intermédiaire de moyens de déplacement de la partie mobile entre une position rapprochée et une position écartée du capot fixe, les moyens de déplacement comportant des moteurs asynchrones comportant chacun un stator ayant des enroulements reliés en parallèle à un circuit d'alimentation et un rotor ayant des enroulements reliés chacun à une charge résistive en parallèle avec un enroulement du rotor de chacun des autres moteurs.

Les enroulements des rotors sont ainsi interconnectés. Les champs tournants dans les stators ont des caractéristiques identiques et les champs tournants dans les rotors ont une même vitesse de rotation sans pour autant que les rotors soient soumis à des efforts identiques (les efforts appliqués aux rotors doivent cependant être de même sens, ce qui correspond au cas nominal du déplacement d'un capot mobile de nacelle). La synchronisation des moyens de déplacement est dès lors obtenue de manière particulièrement simple par l'interconnexion des rotors et en utilisant une unique électronique de commande. Les moyens de déplacement ont en outre une structure relativement légère et compacte.

Selon des réalisations alternatives :
- la charge résistive comporte des résistances reliées en étoile les unes aux autres,
- la charge résistive comporte un circuit onduleur relié au circuit d'alimentation.

La première réalisation a une structure particulièrement simple, légère, compacte et peu onéreuse. La deuxième réalisation permet d'optimiser le rendement électrique global des moyens de déplacement.

De préférence, une cellule de mesure de courant est montée en sortie d'au moins un des enroulements d'un des rotors.

Le courant en sortie du rotor est l'image du courant circulant dans le stator et peut être utilisée comme paramètre de commande du moteur. Il n'est dès lors pas nécessaire d'utiliser des capteurs intégrés aux moteurs.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue schématique en coupe longitudinale de la nacelle conforme à l'invention,
- la figure 2 est un schéma du circuit d'alimentation des moteurs,
- la figure 3 est un schéma d'une variante de réalisation de ce circuit d'alimentation,
- la figure 4 est une vue analogue à la figure 1 d'une nacelle selon une variante de réalisation.

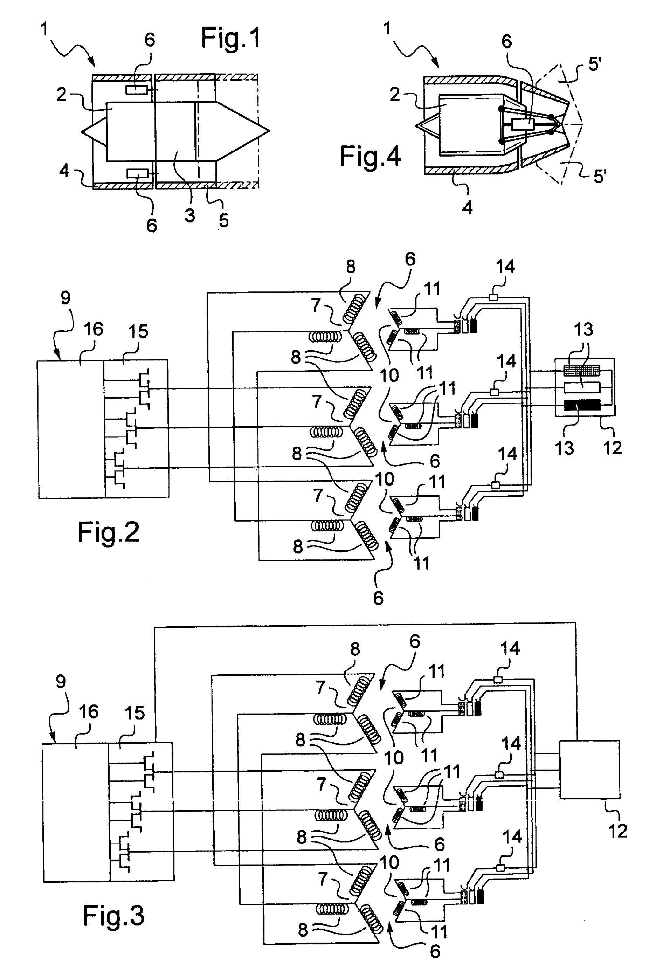

En référence à la figure 1, l'invention concerne une nacelle, généralement désignée en 1, de réception d'un moteur d'aéronef, ici un turboréacteur à double flux 2 comportant un inverseur de poussée symbolisé en 3. L'inverseur de poussée 3, qui comporte par exemple des pétales ou des aubes de renvoi du flux vers l'avant, est connu en lui-même et ne sera pas détaillé ici.

La nacelle 1 comporte deux partie tubulaires coaxiales, à savoir un capot fixe 4 entourant la partie avant du turboréacteur 2 et un capot mobile 5 entourant une partie du turboréacteur 2 qui est adjacente à la partie avant de celui-ci et comprend l'inverseur de poussée 3. Le capot mobile 5 peut comprendre une seule pièce ayant une section transversale en O ouvert vers le haut pour le passage du pylône de fixation du moteur sous la voilure ou deux pièces ayant une section transversale en C s'emboîtant de chaque côté du turboréacteur 2. Le capot mobile 5 est monté de façon connue en elle-même sur des glissières pour coulisser entre une position rapproché du capot fixe 4, dans laquelle le capot mobile 5 recouvre l'inverseur de poussée 3, et une position écartée du capot fixe 4, dans laquelle le capot mobile 5 découvre l'inverseur de poussée 3.

En référence également à la figure 2, la nacelle comprend des moyens de déplacement du capot mobile 5 entre ses deux positions.

Ces moyens comprennent des moteurs 6 électriques asynchrones qui sont répartis sur le capot fixe 4 et qui ont un arbre de sortie entraînant une vis sans fin sur laquelle est monté un écrou solidaire du capot mobile 5.

Les moteurs 6 comportent chacun un stator 7 comportant ici trois enroulements 8. Les enroulements 8 des stators 7 des moteurs 6 sont reliés en parallèle à un circuit d'alimentation 9 comportant de façon connue en elle-même un circuit onduleur 15 piloté par un circuit de commande 16.

Les moteurs 6 comportent chacun un rotor 10 comportant ici trois enroulements 11. Les enroulements 11 des rotors 10 des moteurs 6 sont reliés à une charge résistive 12. La charge résistive 12 comprend ici trois résistances 13 reliées en étoile. Chaque enroulement 11 de chaque rotor 10 est relié à une des résistances 13 en parallèle avec un des enroulements 11 de chacun des deux autres rotors 10. La liaison électrique des résistances 13 avec les enroulements 11 des rotors 10 est réalisée par l'intermédiaire de collecteurs ou tout autre dispositif permettant d'assurer un contact électrique entre un élément fixe et un élément tournant. Les résistances 13 sont de même valeur. Cette valeur permet de déterminer la raideur du système.

Une cellule de mesure de courant 14 est montée en sortie d'un des enroulements 11 de chaque rotor 10 et est reliée au circuit de commande 16. La cellule de mesure de courant 14 permet de s'affranchir de l'utilisation de capteurs intégrés aux moteurs.

La vitesse de chaque moteur 6 peut ainsi être évaluée et le circuit de commande 16 commande un arrêt des moteurs 6 lorsqu'est détectée une différence de vitesse supérieure à un seuil prédéterminé.

Dans la variante de la figure 3, la charge résistive 12 comprend un circuit onduleur relié à l'entrée du circuit d'alimentation 9 pour réinjecter dans les ponts du circuit onduleur 15 du circuit d'alimentation 9 l'énergie prélevée en sortie des rotors 10.

Bien entendu, l'invention n'est pas limitée aux modes de réalisations décrits mais englobe toute variante entrant dans le champ de l'invention telle que définie par les revendications.

En particulier, l'invention est utilisable pour le déplacement de toute partie mobile de nacelle.

En outre l'invention s'applique aux nacelles équipées de tout type d'inverseur de poussée, à aubes, pétales ou portes (par exemple de type « clamshell » ou « bucket »).

Ainsi, à la figure 4, est représenté un moteur 2 entouré d'une nacelle 1 comportant un capot fixe 4 et des parties mobiles sous forme de portes 5' pivotantes. Les portes sont incurvées autour d'un axe sensiblement perpendiculaire à un axe de pivotement des portes. Les portes 5' sont mobiles entre une position rapprochée du capot fixe dans laquelle elles s'étendent dans le prolongement du capot fixe en définissant à l'opposé du capot fixe une ouverture pour la sortie du flux gazeux et une position écartée du capot fixe dans laquelle les portes sont en contact l'une avec l'autre à l'opposé du capot fixe et définissent avec le capot fixe une ouverture de sortie du flux gazeux.

## Revendications

1. Nacelle (1) de réception d'un moteur d'aéronef (2), comportant un capot fixe (4) tubulaire et au moins une partie mobile (5, 5') reliée au capot fixe par l'intermédiaire de moyens de déplacement de la partie mobile entre une position rapprochée et une position écartée du capot fixe, **caractérisée en ce que** les moyens de déplacement comportent des moteurs (6) asynchrones comportant chacun un stator (7) ayant des enroulements (8) reliés en parallèle à un circuit d'alimentation (9) et un rotor (10) ayant des enroulements (11) reliés chacun à une charge résistive (12) en parallèle avec un enroulement du rotor de chacun des autres moteurs.

2. Nacelle selon la revendication 1, dans lequel la charge résistive (12) comporte des résistances (13) reliées en étoile les unes aux autres.

3. Nacelle selon la revendication 1, dans lequel la charge résistive (12) comporte un circuit onduleur relié au circuit d'alimentation (9).

4. Nacelle selon la revendication 1, dans lequel une cellule de mesure de courant (14) est montée en sortie d'au moins un des enroulements (11) d'un des rotors (10).

5. Nacelle selon la revendication 1, dans laquelle la partie mobile est un capot tubulaire (5) coulissant.

6. Nacelle selon la revendication 1, comportant deux parties mobiles en forme de portes (5') pivotantes, et incurvées autour d'un axe sensiblement perpendiculaire à un axe de pivotement des portes.

## Patentansprüche

1. Gondel (1) zur Aufnahme eines Luftfahrzeug-Motors (2), umfassend eine rohrförmige feste Haube (4) und mindestens einen beweglichen Abschnitt (5, 5'), der durch Mittel zur Verlagerung des beweglichen Abschnitts zwischen einer angenäherten Position und einer abgelenkten Position der festen Haube mit dieser verbunden ist, **dadurch gekennzeichnet, dass** die Verlagerungsmittel Asynchronmotoren (6) umfassen, die jeweils einen Stator (7) mit Wicklungen (8) aufweisen, die parallel zu einem Versorgungsstromkreis (9) geschaltet sind, und einen Rotor (10) mit Wicklungen (11) umfassen, die jeweils parallel zu einer Rotorwicklung eines jeden anderen Motors mit einer ohmschen Last (12) verbunden sind.

2. Gondel nach Anspruch 1, bei der die ohmsche Last (12) Widerstände (13) umfasst, die sternförmig miteinander verbunden sind.

3. Gondel nach Anspruch 1, bei der die ohmsche Last (12) eine Wechselrichterschaltung umfasst, die an den Versorgungsstromkreis (9) angeschlossen ist.

4. Gondel nach Anspruch 1, bei der eine Strommesszelle (14) am Ausgang mindestens einer der Wicklungen (11) von einem der Rotoren (10) angeordnet ist.

5. Gondel nach Anspruch 1, bei der der bewegliche Abschnitt eine rohrförmige gleitende Haube (5) ist.

6. Gondel nach Anspruch 1, umfassend zwei bewegliche Abschnitte in Form von Türen (5'), die schwenkbar und um eine Achse herum gekrümmt sind, die im Wesentlichen senkrecht zu einer Drehachse der Türen ist.

## Claims

1. A nacelle (1) for receiving an aircraft engine (2), the nacelle comprising a tubular stationary cover (4) and at least one movable portion (5, 5') connected to the stationary cover via movement means for moving the movable portion between a position close to the stationary cover and a position spaced apart therefrom, the nacelle being **characterized in that** the movement means comprise asynchronous motors (6), each having a stator (7) with windings (8) connected in parallel to a power supply circuit (9) and a rotor (10) having windings (11), each connected to a resistive load (12) in parallel with a winding of the rotor of each of the other motors.

2. A nacelle according to claim 1, wherein the resistive load (12) comprises resistors (13) connected to one another in a star configuration.

3. A nacelle according to claim 1, wherein the resistive load (12) comprises an inverter circuit connected to the power supply circuit (9).

4. A nacelle according to claim 1, wherein a current-measuring cell (14) is connected in the outlet of at least one of the windings (11) of one of the rotors (10).

5. A nacelle according to claim 1, wherein the movable portion is a slidably-mounted tubular cover (5).

6. A nacelle according to claim 1, including two movable portions in the form of pivotally-mounted gates (5'), the portions being curved about an axis that is substantially perpendicular to a pivot axis of the gates.
